# EUROPEAN PATENT APPLICATION

(11) **EP 4 692 548 A1**
(43) Date of publication of application: **11.02.2026**
(21) Application number: 24778057.0
(22) Date of filing: 27.03.2024
(51) Int. Cl.: F04C 2/10, H02K 7/14

(54) **ELECTRIC PUMP**

(30) Priority: 28.03.2023 CN 202310315730; 28.03.2023 CN 202310335358
(71) Applicant: ZHEJIANG SANHUA AUTOMOTIVE COMPONENTS CO., LTD., Hangzhou, Zhejiang 310018 (CN)
(72) Inventor: ZHANG, Jun, Hangzhou, Zhejiang 310018 (CN); HU, Jundi, Hangzhou, Zhejiang 310018 (CN); YIN, Bingjiu, Hangzhou, Zhejiang 310018 (CN)
(74) Representative: Maikowski & Ninnemann Patentanwälte Partnerschaft mbB
(86) International application number: PCT/CN2024/084044
(87) International publication number: WO 2024/199271

(57) **Abstract**

An electric pump, comprising a stator winding (131) and a housing (134). The housing (134) comprises a first housing (1341) and a second housing (1342), wherein the first housing (1341) is injection-molded by taking the stator winding (131) as an insert, so as to form a first assembly (136). The second housing (1342) is injection-molded by taking the first assembly (136) as an insert; and the housing (134) comprises a protrusion (1341c) and a fitting portion (1342d). One of the protrusion (1341c) and the fitting portion (1342d) is arranged on the first housing (1341), and the other one is arranged on the second housing (1342). The protrusion (1341c) is in limiting fit with the fitting portion (1342d) in the axial direction of the electric pump (100). In the electric pump, the limiting of the second housing is facilitated, thereby facilitating a reduction in the risk of the first housing being separated from the second housing of the electric pump under an external acting force.

## Description

The present application claims the priorities to Chinese Patent Application No. 202310315730.X, titled "ELECTRIC PUMP", filed with the China National Intellectual Property Administration on March 28, 2023, and Chinese Patent Application No. 202310335358.9, titled "ELECTRIC PUMP", filed with the China National Intellectual Property Administration on March 28, 2023, both of which are incorporated herein by reference in their entireties.

### FIELD

The present application relates to a fluid pump, and in particular to an electric pump.

### BACKGROUND

An electric pump includes a stator winding and a housing, which is an injection-molded body and is formed by at least two times of injection molding. A technical issue to be addressed by those skilled in the art is to reduce the risk of separation between the injection-molded bodies formed in the two times of injection molding under an external force.

### SUMMARY

An object of the present application is to provide an electric pump, in which the second housing is better limited, to reduce the risk of separation between the first housing and the second housing.

In view ofthis, the following technical solution is provided in one embodiment of the present application. An electric pump includes a stator winding and a housing. The housing includes a first housing and a second housing, and at least part of the first housing is formed by insert molding with the stator winding as an insert. A first assembly is defined to include the first housing and the stator winding. At least part of the second housing is formed by insert molding with the first assembly as an insert. The housing includes a protrusion and a fitting part, where one of the protrusion and the fitting part is provided on the first housing, and the other one of the protrusion and the fitting part is provided on the second housing. The protrusion is in a limiting fit with the fitting part in an axial direction of the electric pump.

According to the embodiment of the present application, the housing includes a protrusion and a fitting part, one of the protrusion and the fitting part is provided on the first housing, the other one of the protrusion and the fitting part is provided on the second housing, and the protrusion is in a limiting fit with the fitting part. In this way, it is beneficial for limiting the second housing, thereby reducing the risk of separation between the first housing and the second housing when the electric pump is subjected to an external force.

### BRIEF DESCRIPTION OF THE DRAWINGS

FIG. 1 is a schematic perspective view showing the structure of an electric pump according to a first embodiment of the present application;
FIG. 2 is a schematic exploded view showing the structure of the electric pump in FIG. 1;
FIG. 3 is a schematic cross-sectional view of the electric pump in FIG. 1 taken along line X-X;
FIG. 4 is a schematic perspective view showing the structure of a stator winding of the electric pump in FIG. 1;
FIG. 5 is a schematic perspective view showing the structure of a stator assembly of the electric pump in FIG. 1;
FIG. 6 is a schematic exploded view showing the structure of the stator assembly in FIG. 5;
FIG. 7 is a schematic cross-sectional view of the stator assembly in FIG. 5 taken along line Y-Y;
FIG. 8 is a schematic perspective view showing the structure of a first assembly at an angle;
FIG. 9 is a schematic cross-sectional view of the first assembly in FIG. 8 taken along line Z-Z;
FIG. 10 is a schematic perspective view showing the structure of a second housing in FIG. 5 according to a specific embodiment of the present application;
FIG. 11 is a schematic cross-sectional view of the second housing in FIG. 10 at an angle;
FIG. 12 is a schematic cross-sectional view of the stator assembly in FIG. 5 taken along line Y'-Y';
FIG. 13 is a schematic perspective view showing the structure of a connecting plate assembly being assembled to the stator winding in FIG. 5;
FIG. 14 is a schematic perspective view showing the structure of the connecting plate assembly in FIG. 13 (with an insertion connector removed) according to an embodiment of the present application;
FIG. 15 is a schematic cross-sectional view of the connecting plate assembly in FIG. 13 according to another embodiment of the present application;
FIG. 16 is a schematic perspective view showing the structure of a body portion in FIG. 15 being embedded in a limiting member;
FIG. 17 is a schematic perspective view showing the structure of a portion of a pin part of FIG. 15 being embedded in an insertion connector according to an embodiment of the present application;
FIG. 18 is a schematic perspective view showing the structure of a portion of the pin part of FIG. 15 being embedded in the insertion connector according to another embodiment of the present application; and
FIG. 19 is a schematic cross-sectional view of the second housing in FIG. 11 taken along line A-A.

**Reference numerals:**

| | | | |
|---|---|---|---|
| 100 | electric pump, | 11 | pump cover, |
| 12 | rotating assembly, | 121 | impeller assembly, |
| 122 | rotor assembly, | 13 | stator assembly, |
| 131 | stator winding, | 1311 | stator core, |
| 1312 | insulation frame, | 1313 | winding; |
| 132 | connecting plate assembly, | 1321 | limiting member, |
| 1322 | conductive member, | 1322a | body portion, |
| 1322b | pin part, | 1322c | electrical connection portion, |
| 1322d | base, | 1322e | external power connection portion, |
| 1323 | insertion connector, | 1323a | insertion hole, |
| 1323b | first opening, | 1323c | second opening, |
| 1323d | plate part, | 1323e | hollowed-out portion, |
| 1324 | pressure relief hole, | 133 | pump shaft, |
| 1331 | fixed part, | 1332 | rotating part, |
| 134 | housing, | 1341 | first housing, |
| 1341a | first body portion, | 1341b | first edge portion, |
| 1341c | protrusion, | 1341d | matching slot, |
| 1341e | groove portion, | 1342 | second housing, |
| 1342a | radial extension section, | 1342b | cylindrical part, |
| 1342c | flange part, | 1342d | fitting part, |
| 1342e | reinforcing rib, | 1342f | first protruding part, |
| 1342g | limiting groove, | 1342h | inner side wall surface, |
| 1342r | outer side wall surface, | 1411 | rotor chamber bottom portion, |
| 1412 | rotor chamber side portion, | 136 | first assembly, |
| 1362 | first chamber, | 1362a | bottom portion, |
| 1362b | side portion, | 141 | rotor chamber, |
| 15 | impeller chamber, | 20 | pump inner chamber. |

### DETAILED DESCRIPTION OF THE EMBODIMENTS

The present application will be further illustrated hereinafter in conjunction with the accompanying drawings and specific embodiments.

The specific embodiments of the present application are described in detail hereinafter in conjunction with the accompanying drawings. First of all, it should be noted that the positional terms, such as upper, lower, left, right, front, rear, inner, outer, top and bottom, mentioned or possibly mentioned in this specification are relative concepts defined based on the configuration shown in the corresponding drawings, and therefore may vary with their different positions or states of use. Therefore, these and other positional terms should not be construed as restrictive terms.

An electric pump in the following embodiments can provide power for flowing of a working medium of a vehicle thermal management system, where the working medium may be either a 50% ethylene glycol aqueous solution or clean water. Of course, the working medium may be other substances.

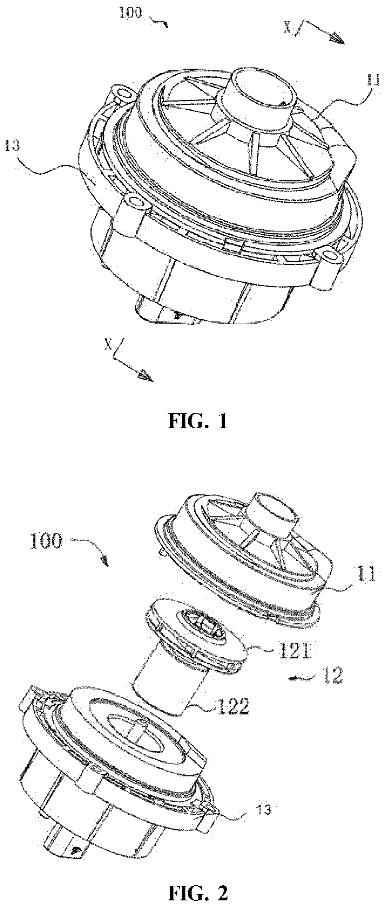

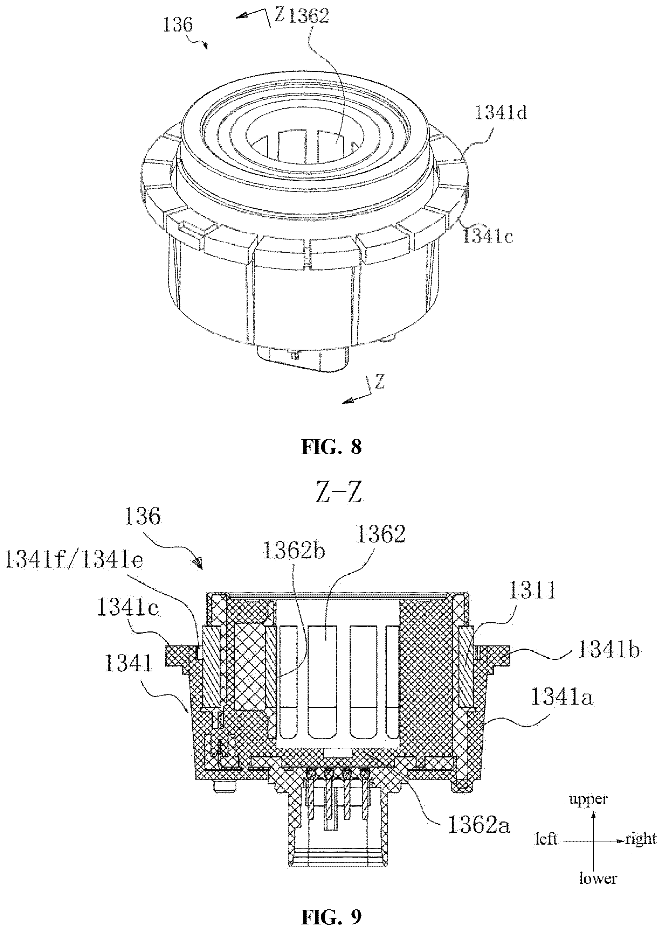

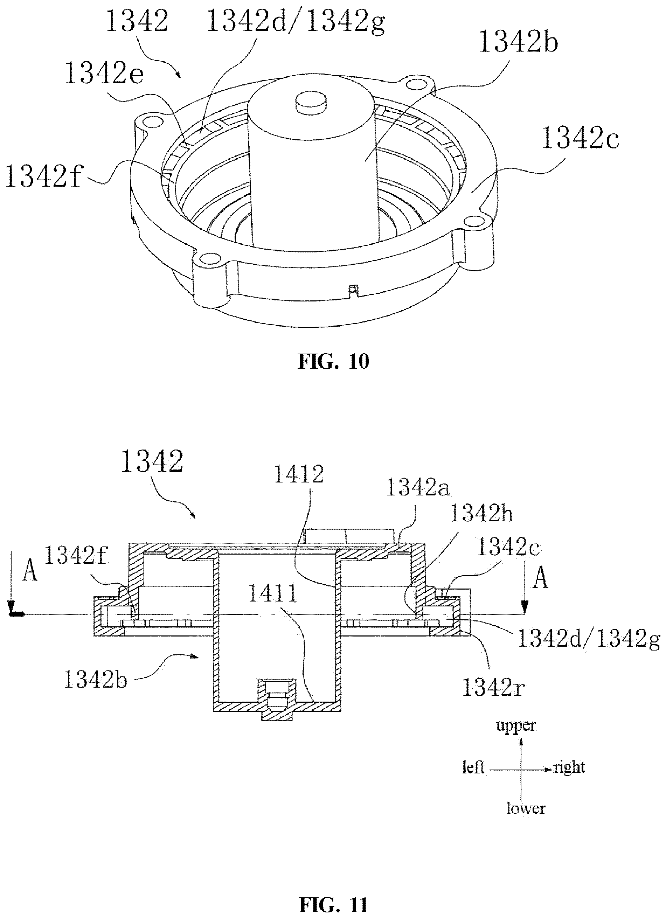

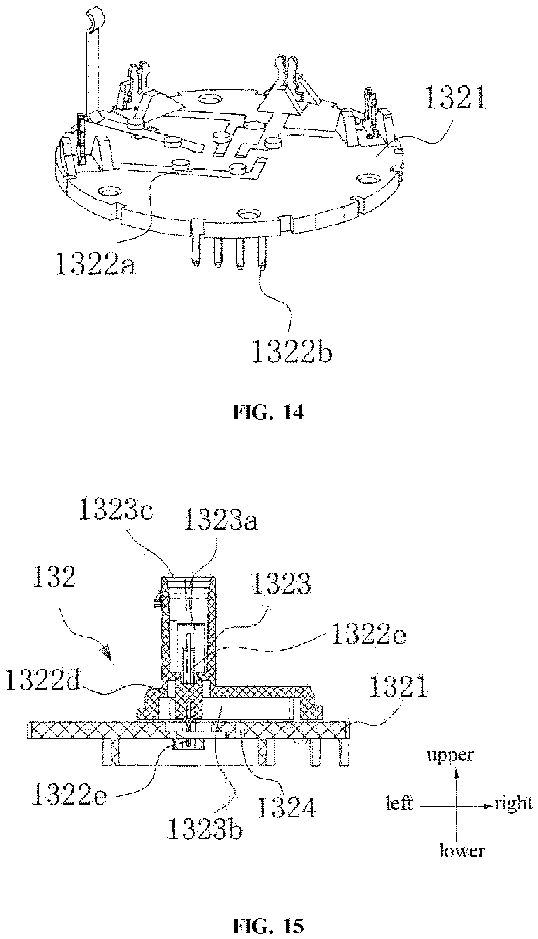

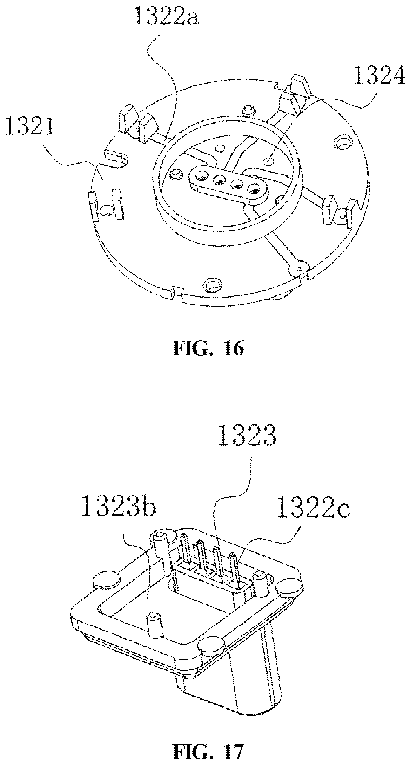

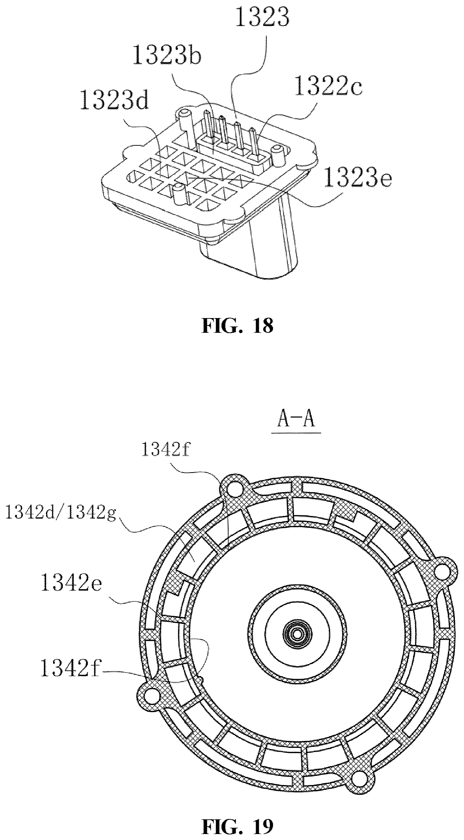

As shown in FIG. 1 to FIG. 19, an electric pump 100 is provided according to the present application, including a pump cover 11, a rotating assembly 12, and a stator assembly 13. The stator assembly 13 includes a connecting plate assembly 132, a stator winding 131, a pump shaft 133, and a housing 134. The pump cover 11 is hermetically fixed to the stator assembly 13. It should be noted that the hermetical fixing here means that the working medium is prevented from leaking to the outside of the electric pump when the electric pump is in operation. The pump shaft 133 is fixed to the housing 134 by injection molding. The electric pump 100 has a pump inner chamber 20, and the rotating assembly 12 is located in the pump inner chamber 20. The pump inner chamber 20 includes a rotor chamber 141 and an impeller chamber 15 that are in communication with each other. The rotating assembly 12 includes a rotor assembly 122 and an impeller assembly 121, and the rotor assembly 122 includes a permanent magnet. At least part of the rotor assembly 122 is located in the rotor chamber 141, the impeller assembly 121 is located in the impeller chamber 15, and the working medium can flow through the pump inner chamber 20. In a specific embodiment, the other end of the pump shaft 133 is at least partially located in the rotor chamber 141, at least part of the rotating assembly 12 is sleeved over an outer periphery of the pump shaft 133, and the rotating assembly 12 is in transmission connection with the pump shaft 133. Of course, in other embodiments, the rotating assembly 12 may be fixedly connected to the pump shaft 133, and the pump shaft 133 rotates together with the rotor assembly 122. The connecting plate assembly 132 includes a limiting member 1321 and a conductive member 1322. The limiting member 1321 is limitedly or fixedly connected to the stator winding 131, and the conductive member 1322 is limitedly or fixedly connected to the limiting member 1321. Specifically, the conductive member 1322 is partially embedded in the limiting member 1321, where the limiting member 1321 is an injection-molded member. The conductive member 1322 includes a first connecting end and a second connecting end, where the first connecting end is electrically connected to the stator winding 131, and the second connecting end serves as a pin end electrically connected to an external power supply for the electric pump 100. Of course, in other embodiments, the electric pump 100 may not include the pump cover 11, instead, the pump cover 11 is integrated on an external structure. This configuration facilitates the integrated design of the electric pump 100, so that the electric pump 100 has a more compact structure, which is more beneficial to miniaturization and lightweight of the structure of the electric pump 100. When the electric pump 100 is in operation, an excitation magnetic field generated by the stator winding 131 is controlled by controlling a current of the stator winding 131, and the rotating assembly 12 rotates around the pump shaft 133 under the action of the excitation magnetic field.

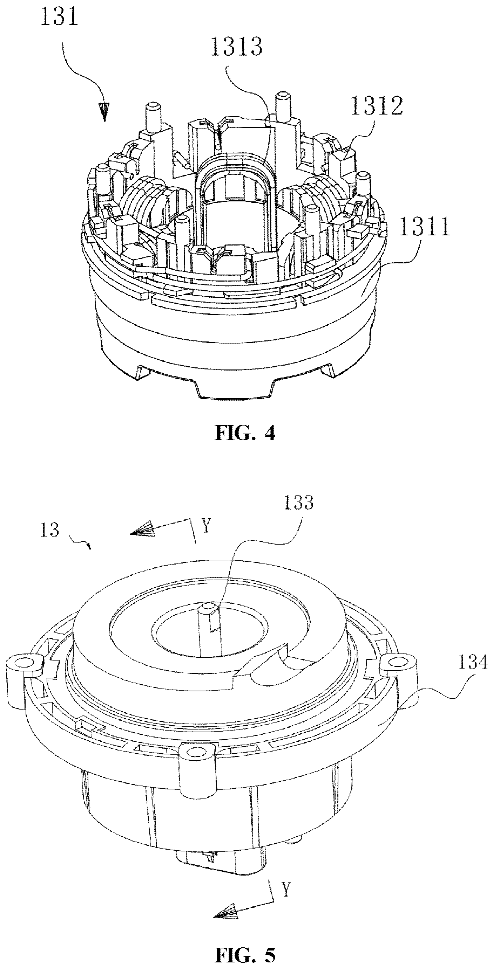

As shown in FIG. 4, the stator winding 131 includes a stator core 13 11, an insulation frame 1312, and a winding 1313. There are at least three windings 1313, the insulation frame 1312 covers at least part of a surface of the stator core 1311, and the insulation frame 1312 is configured to separate the winding 1313 from the stator core 1311, so that the winding 1313 is electrically insulated and isolated from the stator core 1311. The insulation frame 1312 may be integrally formed with the stator core 1311 to form an integral structural member. Specifically, in an embodiment, the insulation frame 1312 is formed by insert molding with the stator core 1311 as an insert. Of course, in other embodiments, the insulation frame 1312 and the stator core 1311 may be separately provided, and "separately provided" herein means that the insulation frame 1312 and the stator core 1311 are processed into two separate parts respectively, and then assembled. Limited connection or fixed connection is realized through assembly. In this embodiment, the insulation frame 1312 is formed by insert molding with the stator core 1311 as the insert. It can be understood that the stator core 1311 and the insulation frame 1312 are formed as one piece. The winding 1313 is wound around the insulation frame 1312. In a specific embodiment, the winding 1313 includes nine windings. Of course, in other embodiments, the winding 1313 may include other numbers of windings, such as three or six or twelve windings.

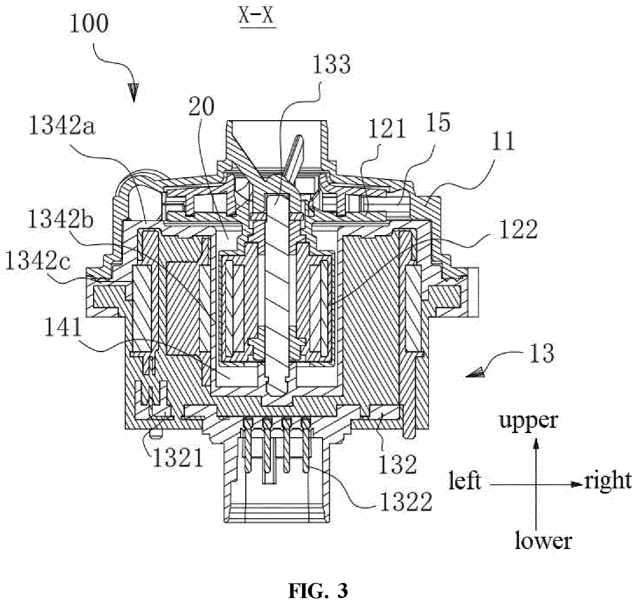

As shown in FIG. 3 to FIG. 19, in an embodiment, the first housing 1341 is formed by insert molding with at least the stator winding 131 as an insert. Specifically, at least part of the first housing 1341 is formed by insert molding with the stator winding 131 as an insert. A first assembly 136 is defined, and the first assembly 136 includes the first housing 1341 and the stator winding 131. The second housing 1342 is formed by insert molding with at least the first assembly 136 and the pump shaft 133 as inserts. Specifically, at least part of the second housing 1342 is formed by insert molding with the first assembly 136 as an insert. The second housing 1342 includes a rotor chamber side portion 1412, and the pump inner chamber 20 is configured for flowing of a working medium. A wall part defining the pump inner chamber 20 includes the rotor chamber side portion 1412, and at least part of the rotor chamber side portion 1412 is made of a material different from that of the first housing 1341. In this way, on one hand, the requirements for material performance grade of the first housing 1341 for operation of the electric pump can be reduced, for example, the requirement for the hydrolysis resistance grade, thus facilitating the reduction of the production cost of the electric pump.

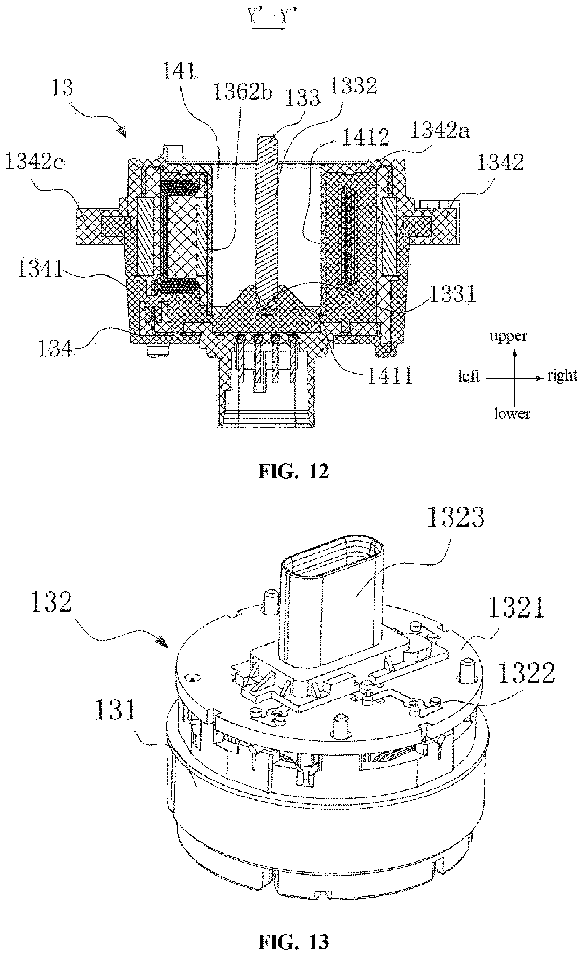

In an embodiment, as shown in FIG. 12, the first housing 1341 may include a rotor chamber bottom portion 1411, and the second housing 1342 may also include the rotor chamber bottom portion 1411. In an embodiment, as shown in FIG. 12, the first housing 1341 is formed by insert molding with the stator winding 131 and the pump shaft 133 as inserts. A first assembly 136 includes the first housing 1341, the pump shaft 133, and the stator winding 131. The second housing 1342 is formed by insert molding with the first assembly 136 as an insert. The first housing 1341 includes the rotor chamber bottom portion 1411, the electric pump 100 includes the pump shaft 133, and the pump shaft 133 includes a fixed part 1331 embedded inside the rotor chamber bottom portion 1411. In this way, the pump shaft 133 and the stator winding 131 are involved in the same step of the injection molding process, which facilitates improving the coaxiality of the pump shaft 133 and the stator winding 131 while reducing the cost of the electric pump. Of course, there're other embodiments, in another embodiment, referring to FIG. 3 to FIG. 11, the first housing 1341 is formed by insert molding with the stator winding 131 as an insert. The first assembly 136 includes the first housing 1341 and the stator winding 131, and the second housing 1342 is formed by insert molding with the pump shaft 133 and the first assembly 136 as inserts.

In an embodiment, as shown in FIG. 3 to FIG. 11, the second housing 1342 includes a cylindrical part 1342b. The cylindrical part 1342b includes a rotor chamber bottom portion 1411 and a rotor chamber side portion 1412. The wall part defining the pump inner chamber 20 further includes the rotor chamber bottom portion 1411, and at least part of one of the rotor chamber bottom portion 1411 and the rotor chamber side portion 1412 is made of a material different from that of the first housing 1341. Thus, when the electric pump is in operation, the working medium is accommodated in the rotor chamber 141, and during a secondary injection molding, for the wall part defining the rotor chamber 141, it can be understood that the rotor chamber bottom portion 1411 and the rotor chamber side portion 1412 are simultaneously formed during the secondary injection molding, which reduces the joint surfaces between the rotor chamber bottom portion 1411 and the rotor chamber side portion 1412, and thereby reducing the risk of leakage of the working medium in the rotor chamber 141 through the joint surfaces when the electric pump 100 is in operation. On the other hand, at least part of one of the rotor chamber bottom portion 1411 and the rotor chamber side portion 1412 is made of a material different from that of the first housing 1341, which facilitates reduction of the production cost of the electric pump 100.

Further, referring to FIG. 3 to FIG. 11, the pump inner chamber 20 includes a rotor chamber 141, and the electric pump 100 includes a rotor assembly 122, at least part of which is located in the rotor chamber 141. A wall part defining the rotor chamber 141 includes a rotor chamber bottom portion 1411 and a rotor chamber side portion 1412, and each of the rotor chamber bottom portion 1411 and the rotor chamber side portion 1412 is made of a material different from that of the first housing 1341. In this way, since each of the rotor chamber bottom portion 1411 and the rotor chamber side portion 1412 is made of a material different from that of the first housing 1341, not only the production cost of the electric pump is reduced but also the service life of the electric pump is prolonged.

Referring to FIG. 3 to FIG. 12, the second housing 1342 is formed by insert molding with at least the first assembly 136 as an insert, and the first housing 1341 is fixed to the second housing 1342 by injection molding. The second housing 1342 includes a radial extension section 1342a, which is arranged on a radial outer side of the rotor chamber side portion 1412 in a radial direction of the electric pump 100. The pump inner chamber 20 includes an impeller chamber 15, and the electric pump 100 includes an impeller assembly 121, at least part of which is located in the impeller chamber 15. A wall part defining the impeller chamber 15 includes the radial extension section 1342a, and at least part of the radial extension section 1342a is made of a material different from that of the first housing 1341. Specifically, the second housing 1342 includes the rotor chamber side portion 1412 and the radial extension section 1342a. In another embodiment, the second housing 1342 includes a cylindrical part 1342b and a radial extension section 1342a. Specifically, the cylindrical part 1342b includes the rotor chamber bottom portion 1411 and the rotor chamber side portion 1412, and a wall part defining the rotor chamber 141 includes the rotor chamber bottom portion 1411 and the rotor chamber side portion 1412. The radial extension section 1342a is provided on a radial outer side of the cylindrical part 1342b in the radial direction of the electric pump 100. Specifically, the wall part defining the impeller chamber 141 includes the radial extension section 1342a. The electric pump 100 has a pump inner chamber 20, and the pump inner chamber 20 is configured for flowing of a working medium when the electric pump 100 is in operation. The wall part defining the pump inner chamber 20 includes the cylindrical part 1342b and the radial extension section 1342a, and at least part of the radial extension section 1342a and the cylindrical portion 1342b are made of a material different from that of the first housing 1341. Thus, firstly, the requirements for material performance grade of the first housing 1341 that is not in contact with the working medium during operation of the electric pump can be reduced, for example, the requirement for the hydrolysis resistance grade, thereby facilitating the reduction of the production cost of the electric pump. Secondly, when the electric pump is in operation, the working medium is accommodated in the rotor chamber 141 and the impeller chamber 15, and the wall part defining the rotor chamber 141 and the wall part defining the impeller chamber 15 are simultaneously formed during the secondary injection molding. Compared with the solution where the radial extension section 1342a and the wall part defining the rotor chamber 141, which is embodied as the rotor chamber bottom portion 1411 and the rotor chamber side portion 1412, are not formed in the same step of the injection molding process, the present solution can reduce the joint surfaces between the radial extension section 1342a and the rotor chamber side portion 1412, thereby reducing the risk of leakage of the working medium in the rotor chamber 141 and the impeller chamber 15 through the above joint surfaces.

Specifically, in an embodiment, referring to FIG. 3 to FIG. 11, the first assembly 136 has a first chamber 1362. A wall part defining the first chamber 1362 includes a bottom portion 1362a and a side portion 1362b, and the bottom portion 1362a is provided at one end of the side portion 1362b. The second housing 1342 includes a rotor chamber bottom portion 1411 and a rotor chamber side portion 1412, which are hermetically connected to each other by injection molding. The rotor chamber bottom portion 1411 is located on an upper side of the bottom portion 1362a of the first chamber 1362 and is in contact with the bottom portion 1362a of the first chamber 1362. The wall part defining the rotor chamber 141 includes the rotor chamber bottom portion 1411 and the rotor chamber side portion 1412, the rotor chamber bottom portion 1411 covers the bottom portion 1362a of the first chamber 1362 in the radial direction of the electric pump 100. The rotor chamber side portion 1412 is located on a radial inner side of the side portion 1362b of the first chamber 1362 and is in contact with the side portion 1362b of the first chamber 1362. The rotor chamber side portion 1412 covers the side portion 1362b of the first chamber 1362 in a circumferential direction of the side portion 1362b of the first chamber 1362. In this way, the housing is formed by at least two times of injection molding, which facilitates improving the appearance quality of the wall part defining the rotor chamber 141, such as the cylindricity of the wall part defining the rotor chamber, thereby facilitating improvement of the efficiency of the electric pump.

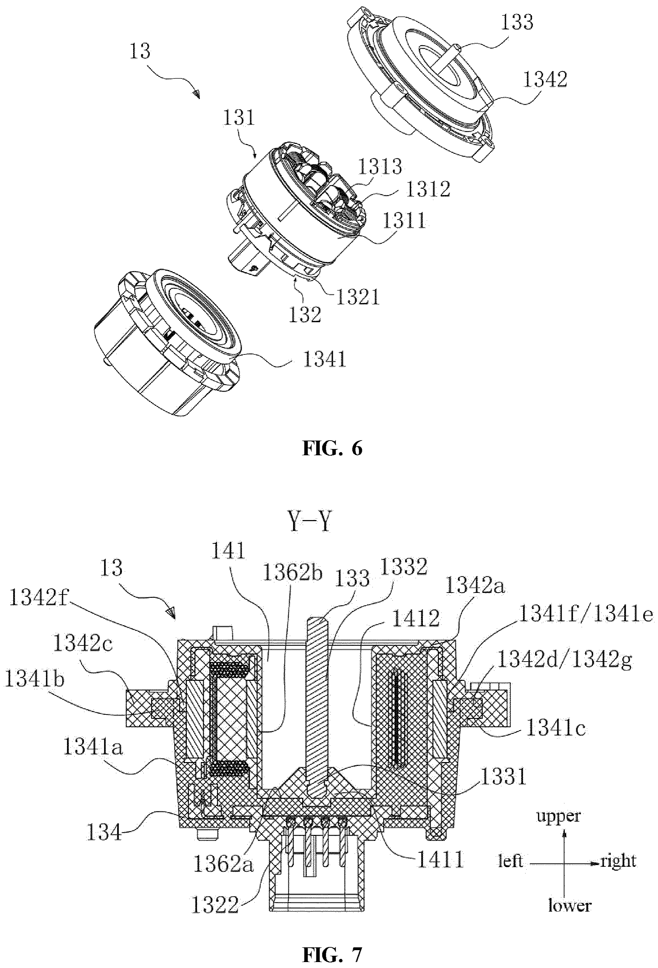

In an embodiment, as shown in FIG. 7 to FIG. 9, an inner side wall surface of the side portion 1362b may only include an inner side wall surface of the first housing 1341. If the inner side wall surface of the side portion 1362b covers an inner side wall surface of the stator core 1311 during the preliminary injection molding, in order to ensure that a magnetic air gap between the stator core 1311 and the rotor assembly is small, during the secondary injection molding, the rotor chamber side portion 1412 is arranged on the inner side wall surface of the side portion 1362b, and thus the rotor chamber side portion 1412 has a thinner thickness. In order to increase the thickness of the rotor chamber side portion 1412 to improve the strength of the rotor chamber side portion 1412, in an embodiment, the inner side wall surface of the side portion 1362b includes both the inner side wall surface of the stator core 1311 and the inner side wall surface of the first housing 1341. Specifically, the first assembly 136 includes a positioning part, and the positioning part includes a support portion and a limiting portion. The support portion is located at an end of the stator core 1311, and the limiting portion is located on an outer periphery of the stator core 1311. During the preliminary injection molding, the support portion and the limiting portion cooperate to serve as a positioning reference for injection molding. The first housing 1341 encloses all components except the positioning part and the inner side wall surface of the stator core 1311 within its first body portion 1341a. It can be understood that the first housing 1341 isolates all components except the positioning part and the inner side wall surface of the stator core 1311 from the air. The above arrangement not only ensures that the magnetic air gap between the stator core 1311 and the rotor assembly is small, but also improves the strength of the rotor chamber side portion 1412.

In another specific embodiment, referring to FIG. 7 to FIG. 9, the first housing 1341 is fixed to the second housing 1342 by injection molding, and the second housing 1342 includes a cylindrical part 1342b and a radial extension section 1342a. Specifically, the cylindrical part 1342b includes a rotor chamber bottom portion 1411 and a rotor chamber side portion 1412, and a wall part defining the rotor chamber 141 includes the rotor chamber bottom portion 1411 and the rotor chamber side portion 1412. The radial extension section 1342a is provided on a radial outer side of the cylindrical part 1342b in the radial direction of the electric pump 100. It should be noted that "radial outer side" herein and hereinafter refers to a direction that is perpendicular to an axial direction of the electric pump and away from the axis of the electric pump. Specifically, a wall part defining the impeller chamber 141 includes the radial extension section 1342a, and the electric pump 100 has a pump inner chamber 20, which is configured for flowing of the working medium when the electric pump 100 is in operation. A wall part defining the pump inner chamber 20 includes the cylindrical part 1342b and the radial extension section 1342a, and the first housing 1341 is made of a material different from that of the second housing 1342. Thus, firstly, the requirements for material performance grade of the first housing 1341 that is not in contact with the working medium during operation of the electric pump can be reduced, for example, the requirement for the hydrolysis resistance grade, thereby facilitating the reduction of the production cost of the electric pump. Secondly, when the electric pump is in operation, the working medium is accommodated in the rotor chamber 141 and the impeller chamber 15, and the wall part defining the rotor chamber 141 and the wall part defining the impeller chamber 15 are simultaneously formed during the secondary injection molding. Compared with the solution where the radial extension section 1342a and the wall part defining the rotor chamber 141, which is embodied as the rotor chamber bottom portion 1411 and the rotor chamber side portion 1412, are not formed in the same step of the injection molding process, the present solution can reduce the joint surfaces between the radial extension section 1342a and the rotor chamber side portion 1412, thereby reducing the risk of leakage of the working medium in the rotor chamber 141 and the impeller chamber 15 through the above joint surfaces.

Further, in an embodiment, referring to FIG. 1 to FIG. 12, the material of the first housing 1341 has hydrolysis resistance less than that of Phenylenesulfide (PPS), and the material of the second housing 1342 has a hydrolysis resistance greater than or equal to that of the Phenylenesulfide. The material of the first housing 1341 may be, but is not limited to, a thermoplastic polyester material, where the thermoplastic polyester material may be, but is not limited to, Polybutylene terephthalate (PBT). The first housing 1341 may be made of a material that integrates heat resistance, flame retardancy and electrical insulation, and the material of the second housing 1342 may be, but is not limited to, a thermoplastic resin material. Specifically, the second housing 1342 may be made of a material with hydrolysis resistance, temperature resistance, weldability, small size shrinkage and low hygroscopicity, and the thermoplastic resin material may be, but is not limited to, Phenylenesulfide (PPS). In this way, not only the production cost of the electric pump 100 is reduced, but also the service life of the electric pump 100 can be prolonged.

Specifically, in an embodiment, referring to FIG. 3 to FIG. 19, the first assembly 136 has a first chamber 1362. A wall part defining the first chamber 1362 includes a bottom portion 1362a and a side portion 1362b, and the bottom portion 1362a is provided at one end of the side portion 1362b. The second housing 1342 includes a rotor chamber bottom portion 1411 and a rotor chamber side portion 1412, which are hermetically connected to each other by injection molding. The rotor chamber bottom portion 1411 is located on an upper side of the bottom portion 1362a of the first chamber 1362 and is in contact with the bottom portion 1362a of the first chamber 1362. The wall part defining the rotor chamber 141 includes the rotor chamber bottom portion 1411 and the rotor chamber side portion 1412, the rotor chamber bottom portion 1411 covers the bottom portion 1362a of the first chamber 1362 in the radial direction of the electric pump 100. The rotor chamber side portion 1412 is located on a radial inner side of the side portion 1362b of the first chamber 1362 and is in contact with the side portion 1362b of the first chamber 1362, and the rotor chamber side portion 1412 covers the side portion 1362b of the first chamber 1362 in a circumferential direction of the side portion 1362b of the first chamber 1362. In this way, the housing is formed by at least two times of injection molding, which facilitates improving the appearance quality of the wall part defining the rotor chamber 141, such as the cylindricity of the wall part defining the rotor chamber, thereby facilitating improvement of the efficiency of the electric pump.

Referring to FIG. 3 to FIG. 19, in an embodiment, the first housing 1341 is formed by insert molding with at least the stator winding 131 as an insert. The first assembly 136 is defined, and it includes the first housing 1341 and the stator winding 131. The second housing 1341 is formed by insert molding with at least the first assembly 136 and the pump shaft 133 as inserts, and the first housing 1341 is fixed to the second housing 1342 by injection molding. The housing 134 includes a protrusion 1341c and a fitting part 1342d, one of the protrusion 1341c and the fitting part 1342d is provided on the first housing 1341, and the other one of the protrusion 1341c and the fitting part 1342d is provided on the second housing 1342. The protrusion 1341c matches the fitting part 1342d for position limiting, to prevent the second housing 1342 from moving relative to the first housing 1341 in the axial direction of the electric pump 100. Specifically, the protrusion 1341c is fixedly connected to the fitting part 1342d by injection molding. It is well known that the working environment of the electric pump 100 is relatively complex, the first housing 1341 and the second housing 1342 are injection-molded bodies, and the first housing 1341 is fixed to the second housing 1342 by injection molding. Under the action of an external force, if the strength of the connection between the first housing 1341 and the second housing 1342 is insufficient to resist the influence of the external force, there is a risk that the first housing 1341 is separated from the second housing 1342. In this way, it is beneficial to limit the second housing 1342 in the axial direction. It should be noted that the axial direction here is the axial direction of the electric pump 100, and the risk of the first housing 1341 being separated from the second housing 1342 is reduced. It should be noted that the external force herein includes but is not limited to internal stress borne by the electric pump 100 in an environment with alternating hot and cold cycles and an external force borne by the electric pump 100 due to vibration under various working conditions.

As mentioned above, referring to FIG. 2 to FIG. 19, the protrusion 1341c may be provided on the first housing 1341 or the second housing 1342, and the fitting part 1342d may be provided on the first housing 1341 or the second housing 1342. In this embodiment, the protrusion 1341c is provided on the second housing 1342, and the fitting part 1342d is provided on the first housing 1341. In an embodiment, referring to FIG. 5 to FIG. 19, the fitting part 1342d is provided on the second housing 1342. A flange part 1342c includes an inner side wall surface 1342h and an outer side wall surface 1342r, and the inner side wall surface 1342h is closer to the cylindrical part 1342b than the outer side wall surface in the radial direction of the electric pump 100. The fitting part 1342d includes a limiting groove 1342g, which is recessed relative to the inner side wall surface 1342h and does not extend through the outer side wall surface 1342r. It can be understood that the limiting groove 1342g has a limiting groove bottom. The first housing 1341 includes a first body portion 1341a and a first edge portion 1341b, at least part of the stator winding 131 is located in the first body portion 1341a, and the first edge portion 1341b is arranged on a radial outer side of the first body portion 1341a. The first edge portion 1341b includes the protrusion 1341c. In this way, the second housing 1342 can be limited in both the axial direction and the radial direction, which facilitates reducing the risk of the first housing 1341 being separated from the second housing 1342.

In an embodiment, referring to FIG. 5 to FIG. 19, the second housing 1342 further includes at least one reinforcing rib 1342e, each of which is at least partially located in the limiting groove 1342g. At least part of the reinforcing rib 1342e is fixed to a wall surface of the limiting groove 1342g by injection molding. The first edge portion 1341b includes at least one matching slot 1341d, each of which runs through the first edge portion 1341b in the axial direction of the electric pump 100, and at least part of the reinforcing rib 1342e is located in the corresponding matching slot 1341d. Specifically, at least part of the reinforcing rib 1342e is embedded in the matching slot 1341d by injection molding. Specifically, the second housing 1342 may include multiple reinforcing ribs 1342e, and the first edge portion 1341b includes multiple matching slots 1341d. In this way, on the one hand, the reinforcing ribs 1342e are respectively located in the matching slots 1341d, which facilitates limiting the movement of the second housing 1342 in the circumferential direction. On the other hand, the multiple reinforcing ribs 1342e and the multiple matching slots 1341d increase the strength of connection between the second housing 1342 and the first housing 1341, which provides conditions for the joint strength between the first housing 1341 and the second housing 1342.

In an embodiment, referring to FIG. 5 to FIG. 19, the housing 134 includes a first protruding part 1342f and a first recess 1341f. One of the first protruding part 1342f and the first recess 1341f is provided on the first housing 1341, and the other one of the first protruding part 1342f and the first recess 1341f is provided on the second housing 1342. The first protruding part 1342f is located in the first recess 1341f, and is fixedly connected to the first recess 1341f by injection molding. The above arrangement facilitates improvement of the connection strength between the first housing 1341 and the second housing 1342.

Referring to FIG. 1 to FIG. 19, the first protruding part 1342f may be provided on the first housing 1341 or the second housing 1342, and the first recess 1341 f may be provided on the first housing 1341 or the second housing 1342. In an embodiment, referring to FIG. 5 to FIG. 19, the first protruding part 1342f is provided on the second housing 1342, the fitting part 1342d includes a limiting groove 1342g, and the first protruding part 1342f protrudes from a lower surface of the limiting groove 1342g in the axial direction of the electric pump 100. The first recess 1341f includes a groove portion 1341e, and the first housing 1341 includes a first body portion 1341a and a first edge portion 1341b. The first edge portion 1341b is provided on a radial outer side of the first body portion 1341a, and the groove portion 1341e is recessed in an upper surface of the first body portion 1341a or/and an upper surface of the first edge portion 1341b in the axial direction of the electric pump 100. It should be noted that in the axial direction of the electric pump, the upper surface of the first body portion 1341a is farther away from the rotor chamber bottom portion 1411 than a lower surface of the first body portion 1341a, and the upper surface of the first edge portion 1341b is farther away from the rotor chamber bottom portion 1411 than a lower surface of the first edge portion 1341b. In this way, on one hand, the connection strength between the first housing 1341 and the second housing 1342 is improved, and on the other hand, the external moisture is prevented from entering the stator winding 131 and corroding the stator winding 131.

In an embodiment, referring to FIG. 1 to FIG. 19, the second housing 1342 includes a first sealing part, the pump cover 11 includes a second sealing part, and the first sealing part is hermetically fixed to the second sealing part. The fixing manner includes welding, bonding and the like, and the welding manner includes laser welding, friction welding and ultrasonic welding. In order to further reduce the production cost of the electric pump 100, in an embodiment, referring to FIG. 1 to FIG. 19, the second housing 1342 further includes a flange part 1342c, which is provided on a radial outer side of the radial extension section 1342a in the radial direction of the electric pump 100. The electric pump 100 includes a pump cover 11, a portion of the pump cover 11 for welding is located above the flange part 1342c, and the pump cover 11 is fixedly connected to the flange part 1342c by welding. In this way, the fixing structural member for connecting the pump cover 11 to the stator assembly 13 and the sealing structural member at the joint between the pump cover 11 and the stator assembly 13 are reduced, thereby facilitating the reduction in the production cost of the electric pump 100.

A connecting plate assembly 132 will be described in detail hereinafter.

As shown in FIG. 1 to FIG. 4 and FIG. 13 to FIG. 18, in an embodiment, in the axial direction of the electric pump 100, the connecting plate assembly 132 is arranged in a limited manner or fixedly connected with respect to the stator winding 131 at an end of the stator winding 131, and the connecting plate assembly 132 is electrically connected to the winding 1313 of the stator winding 131. The first housing 1341 is formed by insert molding with at least the stator winding 131 and the connecting plate assembly 132 as inserts, and at least part of the connecting plate assembly 132 and a part of the stator winding 131 are located in the first housing 1341. In this way, firstly, the miniaturization of the electric pump 100 in the radial direction can be realized, and secondly, the connecting plate assembly 132 and the stator winding 131 are used as inserts for insert molding, which simplifies the assembly process of the electric pump 100. For the convenience of the following description, the insert molding with the stator winding 131 and the connecting plate assembly 132 as inserts is defined as the preliminary injection molding, and the insert molding with the first assembly 136 and the pump shaft 133 as inserts is defined as the secondary injection molding.

In an embodiment, referring to FIG. 13 to FIG. 18, the connecting plate assembly 132 includes a limiting member 1321, a conductive member 1322, and an insertion connector 1323. Specifically, the limiting member 1321 and the insertion connector 1323 are injection-molded members, and the conductive member 1322 is a metal member. The conductive member 1322 includes a body portion 1322a and a pin part 1322b, and the body portion 1322a is fixedly or limitedly connected to the pin part 1322b. Specifically, the body portion 1322a may be integrally formed with the pin part 1322b. Alternatively, the body portion 1322a and the pin part 1322b may be separate structures, which are fixedly connected to each other by welding or electrically connected to each other after the pin part 1322b is inserted into the body portion 1322a. The electric pump 100 includes a pin (not shown in the figure), and the pin may be integrally formed with the conductive member 1322; alternatively, the pin and the conductive member 1322 may be separate structures. One end of the pin is electrically connected to a wiring end of the stator winding 131, and the other end of the pin is fixedly connected to the body portion. The insertion connector 1323 is fixedly or limitedly connected to the limiting member 1321, and the insertion connector 1323 has an insertion hole 1323a. At least part of the body portion 1322a is embedded in the limiting member 1321, at least part of the pin part 1322b is located in the insertion hole 1323a. In this way, the insertion connector 1323 may be injection-molded in advance. It can be understood that during the preliminary injection molding, the first housing 1341 is formed by insert molding with the insertion connector 1323 as an insert, which facilitates simplifying the structure of the mold used in the preliminary injection molding, thereby providing conditions for reducing the production cost of the electric pump 100.

In an embodiment, referring to FIG. 1, and FIG. 13 to FIG. 18, the body portion 1322a and the pin part 1322b are separate structures, and the insertion connector 1323 is limitedly connected to the limiting member 1321. The pin part 1322b includes an electrical connection portion 1322c, a base 1322d, and an external power connection portion 1322e. The electrical connection portion 1322c is limitedly connected to the body portion 1322a, the base 1322d is fixed to the insertion connector 1323 by injection molding, the external power connection portion 1322e is configured for connecting an external power supply, and at least part of the external power connection portion 1322e is located in the insertion hole 1323a. In this way, the assembly formed by at least part of the pin part 1322b and the insertion connector 1323 through injection molding is inserted into the conductive member 1322 embedded in the limiting member 1321 to realize electrical connection, which improves the adaptability of the connecting plate assembly 132. That is, the assembly formed by at least part of the pin part 1322b and the insertion connector 1323 can be applied to different types of electric pumps, thereby facilitating the reduction in the production cost of the electric pump.

In order to reduce the deformation of the connecting plate assembly 132 during injection molding, referring to FIG. 1, and FIG. 13 to FIG. 18, in an embodiment, the insertion hole 1323a runs through the insertion connector 1323 in a direction parallel to the axial direction of the electric pump 100. The insertion hole 1323a includes a first opening 1323b and a second opening 1323c, and the first opening 1323b is closer to the limiting member 1321 than the second opening 1323c. The connecting plate assembly 132 includes a pressure relief hole 1324, which is provided parallel to a thickness direction of the limiting member 1321. It should be noted that the thickness direction of the limiting member 1321 is parallel to the axial direction of the electric pump 100. The pressure relief hole 1324 runs through the limiting member 1321, and along a direction parallel to the axial direction of the electric pump 100, when a wall part defining the first opening 1323b and a wall part defining the pressure relief hole 1324 are projected onto an upper surface of the limiting member 1321, a projection of the wall part defining the pressure relief hole 1324 is located within that of the wall part defining the first opening 1323b. The insertion connector 1323 is fixedly or limitedly connected to the limiting member 1321, and the first opening 1323b is located above the limiting member 1321. During the preliminary injection molding, the limiting member 1321 corresponding to the first opening 1323b will be deformed under the injection molding pressure. In view of the above, the pressure relief hole 1324 is provided on the limiting member 1321 corresponding to the first opening 1323b. In this way, at least part of the injection molding pressure will be released through the pressure relief hole 1324 during the preliminary injection molding, thereby facilitating the reduction of the deformation of the connecting plate assembly 132 during the preliminary injection molding, as well as the reduction of the electrical connection failure of the electric pump 100.

In another embodiment, referring to FIG. 1, and FIG. 13 to FIG. 18, the insertion hole 1323 runs through the insertion connector 1323 in the direction parallel to the axial direction of the electric pump 100. The insertion hole 1323 includes a first opening 1323b and a second opening 1323c, and the first opening 1323b is closer to the limiting member 1321 than the second opening 1323c. The insertion connector further includes a plate part 1323d, and at least part of which is located in the first opening 1323b. The plate part 1323d has at least one hollowed-out portion 1323e, and at least part of an outer side wall of the plate part 1323d is fixed to a wall part defining the first opening 1323b by injection molding. With the plate part 1323d, the strength of the insertion connector 1323 can be increased, and the deformation of the connecting plate assembly 132 as an insert during injection molding is reduced, thereby facilitating the reduction of the electrical connection failure of the electric pump 100.

It should be noted that, the above embodiments are only intended to illustrate the present application rather than to limit the technical solutions described in the present application. Although the present specification has been described in detail with reference to the embodiments as described above, it should be understood by those skilled in the art that modifications or equivalent substitutions may still be made by those skilled in the art to the technical solutions of the present application, and all technical solutions and improvements thereof that do not depart from the spirit and scope of the present application shall be included within the scope of the claims of the present application.

## Claims

1. An electric pump (100), comprising a stator winding (131) and a housing (134), the housing (134) comprising a first housing (1341) and a second housing (1342), wherein
at least part of the first housing (1341) is formed by insert molding with the stator winding (131) as an insert; a first assembly (136) is defined, comprising the first housing (1341) and the stator winding (131);
at least part of the second housing (1342) is formed by insert molding with the first assembly (136) as an insert; the housing (134) comprises a protrusion (1341c) and a fitting part (1342d), one of the protrusion (1341c) and the fitting part (1342d) is provided on the first housing (1341), and the other one of the protrusion (1341c) and the fitting part (1342d) is provided on the second housing (1342); in an axial direction of the electric pump (100), the protrusion (1341c) matches the fitting part (1342d) for position limiting.

2. The electric pump (100) according to claim 1, wherein
the second housing (1342) comprises a cylindrical part (1342b) and a radial extension section (1342a), which is arranged on a radial outer side of the cylindrical part (1342b) in a radial direction of the electric pump (100);
the second housing (1342) further comprises a flange part (1342c), which is provided on a radial outer side of the radial extension section (1342a) in the radial direction of the electric pump (100), and the fitting part (1342d) is provided on the second housing (1342);
the flange part (1342c) comprises an inner side wall surface (1342h) and an outer side wall surface (1342r), and the inner side wall surface (1342h) is closer to the cylindrical part (1342b) than the outer side wall surface (1342r) in the radial direction of the electric pump (100);
the fitting part (1342d) comprises a limiting groove (1342g), which is recessed relative to the inner side wall surface (1342h) and has a limiting groove bottom; and
the first housing (1341) comprises a first body portion (1341a) and a first edge portion (1341b) provided on a radial outer side of the first body portion (1341a), and the first edge portion (1341b) comprises the protrusion (1341c).

3. The electric pump (100) according to claim 2, wherein
the second housing (1342) further comprises at least one reinforcing rib (1342e), at least part of each reinforcing rib (1342e) is located in the limiting groove (1342g), at least part of each reinforcing rib (1342e) is integrally formed with a wall surface of the limiting groove (1342g); and
the first edge portion (1341b) comprises at least one matching slot (1341d), each of which runs through the first edge portion (1341b) in the axial direction of the electric pump (100), at least part of each reinforcing rib (1342e) is located in the corresponding matching slot (1341d), and the reinforcing rib (1342e) is fixedly connected to the matching slot (1341d) by injection molding.

4. The electric pump (100) according to any one of claims 1 to 3, wherein the housing (134) comprises a first protruding part (1342f) and a first recess (1341f), one of the first protruding part (1342f) and the first recess (1341f) is provided on the first housing (1341), and the other one of the first protruding part (1342f) and the first recess (1341f) is provided on the second housing (1342); the first protruding part (1342f) is located in the first recess (1341f), and is fixedly connected to the first recess (1341f) by injection molding.

5. The electric pump (100) according to claim 4, wherein
the first protruding part (1342f) is provided on the second housing (1342), the fitting part (1342d) comprises a limiting groove (1342g), and the first protruding part (1342f) protrudes from a lower surface of the limiting groove (1342g) in the axial direction of the electric pump (100); and
the first recess (1341f) comprises a groove portion (1341e), the first housing (1341) comprises a first body portion (1341a) and a first edge portion (1341b) provided on a radial outer side of the first body portion (1341a), and the groove portion (1341e) is recessed in an upper surface of the first body portion (1341a) or/and an upper surface of the first edge portion (1341b) along the axial direction of the electric pump (100).

6. The electric pump (100) according to claim 1, wherein
the electric pump (100) has a pump inner chamber (20), and the second housing (1342) comprises a rotor chamber side portion (1412); and
the pump inner chamber (20) is configured for flowing of a working medium, a wall part defining the pump inner chamber (20) comprises the rotor chamber side portion (1412), and at least part of the rotor chamber side portion (1412) is made of a material different from that of the first housing (1341).

7. The electric pump (100) according to claim 6, wherein
the second housing (1342) comprises a rotor chamber bottom portion (1411), which is hermetically connected to one end of the rotor chamber side portion (1412); and
the wall part defining the pump inner chamber (20) comprises the rotor chamber bottom portion (1411), and at least part of one of the rotor chamber bottom portion (1411) and the rotor chamber side portion (1412) is made of a material different from that of the first housing (1341).

8. The electric pump (100) according to claim 7, wherein
the electric pump comprises a pump shaft (133), and the second housing (1342) is formed by insert molding with the first assembly (136) and the pump shaft (133) as inserts; and
the pump shaft (133) comprises a fixed part (1331) embedded in the rotor chamber bottom portion (1411), and part of the rotor chamber bottom portion (1411) encases an end of the fixed part (1331).

9. The electric pump (100) according to claim 7 or 8, wherein
the pump inner chamber (20) comprises a rotor chamber (141), the electric pump (100) comprises a rotor assembly (122), and at least part of the rotor assembly (122) is located in the rotor chamber (141); and
a wall part defining the rotor chamber (141) comprises the rotor chamber bottom portion (1411) and the rotor chamber side portion (1412), and each of the rotor chamber bottom portion (1411) and the rotor chamber side portion (1412) is made of a material different from that of the first housing (1341).

10. The electric pump (100) according to any one of claims 6 to 9, wherein the material of the first housing (1341) has a hydrolysis resistance less than that of polyphenylene sulfide, and the material of the second housing (1342) has a hydrolysis resistance greater than or equal to that of polyphenylene sulfide.

11. The electric pump (100) according to any one of claims 1 to 10, wherein
the second housing (1342) comprises a cylindrical part (1342b) and a radial extension section (1342a), which is arranged on a radial outer side of the cylindrical part (1342b) in a radial direction of the electric pump (100); and
the electric pump (100) has a pump inner chamber (20), which is configured for flowing of a working medium when the electric pump (100) is in operation; a wall part defining the pump inner chamber (20) comprises the cylindrical part (1342b) and the radial extension section (1342a), and the first housing (1341) is made of a material different from that of the second housing (1342).

12. The electric pump (100) according to any one of claims 2 to 11, wherein
the electric pump comprises a pump shaft (133), and at least part of the second housing (1342) is formed by insert molding with the pump shaft (133) and the first assembly (136) as inserts;
the cylinder part (1342b) comprises a rotor chamber bottom portion (1411) and a rotor chamber side portion (1412), which are hermetically connected to each other by injection molding, the rotor chamber bottom portion (1411) is located at an end of the rotor chamber side portion (1412); and
the pump shaft (133) comprises a fixed part (1331) embedded in the rotor chamber bottom portion (1411), and part of the rotor chamber bottom portion (1411) covers an end of the fixed part (1331).

13. The electric pump according to any one of claims 1 to 12, wherein
the first assembly (136) has a first chamber (1362), a wall part defining the first chamber (1362) comprises a bottom portion (1362a) and a side portion (1362b), and the bottom portion (1362a) is provided at an end of the side portion (1362b);
the second housing (1342) comprises a rotor chamber bottom portion (1411) and a rotor chamber side portion (1412), which are hermetically connected to each other by injection molding, and the rotor chamber bottom portion (1411) is located on an upper side of the bottom portion (1362a) of the first chamber (1362) and is in contact with the bottom portion (1362a) of the first chamber (1362);
in a radial direction of the electric pump (100), the rotor chamber bottom portion (1411) covers the bottom portion (1362a) of the first chamber (1362), the rotor chamber side portion (1412) is located on a radial inner side of the side portion (1362b) of the first chamber (1362) and is in contact with the side portion (1362b) of the first chamber (1362), and the rotor chamber side portion (1412) covers the side portion (1362b) of the first chamber (1362) in a circumferential direction of the side portion (1362b) of the first chamber (1362).

14. The electric pump according to claim 13, wherein an inner side wall surface of the side portion (1362b) comprises an inner side wall surface of a stator core (1311) and an inner side wall surface of the first housing (1341).

15. The electric pump (100) according to any one of claims 1 to 14, wherein
the electric pump (100) further comprises a connecting plate assembly (132), the connecting plate assembly (132) and the stator winding (131) are arranged in a limited manner or fixedly connected with respect to each other in the axial direction of the electric pump (100), and the connecting plate assembly (132) is electrically connected to the stator winding (131); and
the first housing (1341) is formed by insert molding with at least the stator winding (131) and the connecting plate assembly (132) as inserts, and at least part of the connecting plate assembly (132) and part of the stator winding (131) are located in the first housing (1341).
